# EUROPEAN PATENT APPLICATION

(11) **EP 1 685 948 A1**
(43) Date of publication of application: **02.08.2006**
(21) Application number: 05001803.5
(22) Date of filing: 28.01.2005
(51) Int. Cl.: B29C 70/52, D01D 5/253

(54) **A spiral wire body with a controllable pattern and a forming method thereof**

(71) Applicant: Shieh, Chung-Li, Taichung, Taiwan, 403 (TW)
(72) Inventor: Shieh, Chung-Li, Taichung, Taiwan, 403 (TW)
(74) Representative: Viering, Hans-Martin

(57) **Abstract**

A spiral wire body (1) with a controllable pattern and a forming method thereof, a wire body (1) with a throughout uniform pattern is extruded from a molding device (2) to form a wire body having a core wire (11) and a wrapping layer (12) formed of two or more color plastics, the preceding segment of the wire body (1) with the constant shape can be clipped and drawn to move by the drawing device (5), while the uncooled wire body (1) extruded from the molding section (23) can be twisted in the rotation area by the rotation of the rotation device (4) into the wire body (1) which the surface thereof has a spiral pattern, the spiral patterned wire body (1) then is cooled down through a cooling device (3) so as to form the wire body (1) with a final constant shape in which the surface of the wrapping layer (11) is formed with a controllable spiral pattern.

## Description

### BACKGROUND OF THE INVENTION

### 1. Field of the invention

The present invention relates to a spiral wire body with a controllable pattern and a forming method thereof, and particularly to a wire body formed by two or more color heated plastics and the surface thereof having a bumping spiral shape with a controllable pattern.

### 2. DESCRIPTION OF THE PRIOR ART

A nventional furniture article having a wicker look, as disclosed in U.S. Patent No. 5,704,690 (referred as a cited reference), mainly characterized in that the furniture article comprises a yam, the outer surface thereof comprising an elongated body of polymer material, and at least one groove depressed in said outer surface extending substantially in an axial direction along said body, and each groove of said outer surface has different design in extent and depth, and at least one stripe extending along an axial direction of said body; however, the major disadvantage of such a construction exists in that the stripes and the grooves of the elongated body may vary in position and axial position around the circumference of the elongated body, and the patterns of the stripes and the grooves are rotated into a uncontrollable pattern naturally due to the extruded length of wire, making the elongated body looks as if it is woven by an irregular and uncontrollable material when weaving the elongated body manually or by a machine, and enabling the elongated body to present a natural feeling.

A onventional furniture article having a wicker look is further characterized in that an article of furniture having a wicker look comprising a yam comprising an elongated body of polymer material having an outer surface of a first color, said yarn having at least one stripe of a second color and at least one groove depressed in the outer surface of said yam, said stripe and said groove running substantially in an axial direction on said outer surface of said yarn; the disadvantage of such a construction exists also in that the stripes and the grooves of the elongated body may vary in position and axial position around the circumference of the elongated body, and the patterns of the stripes and the grooves are rotated into uncontrollable patterns naturally due to the extruded length of wire, when weaving the elongated body, the feature of the different colors and un-coordinating stripes provided by the elongated body cannot maintain the stripes and the grooves being formed with a controllable feeling.

Accordingly, in view of disadvantages derived from the above-mentioned conventional furniture article having a wicker look, with the purpose to develop a controllable wire body for furniture article having a simple and unsophisticated construction, full of natural taste, and a gentle and classic appearance, the present inventor had devoted to improve and innovate, and, after studying intensively for many years, developed successfully a spiral wire body with a controllable pattern and a forming method thereof of the present invention.

### SUMMARY OF THE INVENTION

The object of the present invention is to provide a spiral wire body made with various patterns.

The another object of the present invention is to provide a wire body wherein a wire body having a throughout uniform shape with a bumping cross-section is extruded from a molding section and then twisted by the rotation of a rotation device to form a wire body having a spiral pattern on the surface thereof.

The further object of the present invention is to provide a spiral wire body in which the surface pattern thereof is a spiral shape with a controllable pattern, wherein the spiral angle of the wire body can be control through a rotation device and the surface pattern thereof after weaved (manually or by machine) becomes controllable correspondingly.

A spiral wire body with a controllable pattern and a forming method thereof according to the present invention which can achieve the above-mentioned objects comprises:
a core wire made of a metal material, a chemical fiber, or a natural fiber and passed through an after-mentioned molding section;
an injection molding device arranged to have two or more sets of flow channels, a mixing section, and a molding section having a mold, wherein the flow channel provides two or more of plastics heated in liquid state flowing into the mixing section, and then a wire body wrapping with a core wire can be extruded from the molding section and has a throughout uniform shape with a cross-section with bumping periphery according to the mold of the molding section;
a cooling device which is a water container that can cool down the wire body extruded in high temperature through water to form the wire body into a final constant shape;
a rotation device driven by a motor to rotate clockwise, both sides thereof laterally extending to form two vertical fixed plates which two corresponding cylinder units are arranged the inner space therebetween, and the two corresponding cylinder units providing a pressure for clipping the wire body as the wire body running through theretween;
a drawing device arranged with several pairs of corresponding rolling wheels for providing the wire body to run through said pairs of corresponding rolling wheels, driven by a motor for generating a clipping pressure and a drawing action on the wire body, while the cylinder units in the rotation device are rotated due to the drawing action;
a winding base in a disc form in which at the center thereof, a central bearing is provided and driven by a motor, rotating counter-clockwise to collect the wire body into a coil;
wherein the wire body has a core wire and a plastic wrapping layer wrapping the core wire and formed of two or more color plastics, the preceding segment of the wire body with the constant shape can be clipped and drawn to move by the pressure of the drawing device, while the un-cooled wire body extruded from the molding section can be twisted in the rotation area by the rotation of the rotation device into the wire body which the surface thereof has a spiral pattern, the spiral patterned wire body then is cooled down through a cooling device so as to form the wire body with a final constant shape, forming the surface thereof with a controllable spiral pattern and the cross-section thereof having bumping periphery.

### BRIEF DESCRIPTION OF THE DRAWINGS

The drawings disclose an illustrative embodiment of the present invention which serves to exemplify the various advantages and objects hereof, and are as follows:
Fig. 1(A) shows a top view of a manufacturing flow of forming devices for a wire body with a multi-color spiral shape according to the present invention;
Fig. 1 (B) shows a front view of a manufacturing flow of forming devices for a wire body with a multi-color spiral shape according to the present invention;
Fig. 2(A) shows a first pictorial drawing of a wire body having a throughout uniform shape extruded from the molding section;
Fig. 2(B) shows a first pictorial drawing of a wire body with a multi-color spiral shape after formed;
Fig.3(A) shows a second pictorial drawing of a wire body having a throughout uniform shape extruded from the molding section;
Fig. 3(B) shows a second pictorial drawing of a wire body with a multi-color spiral shape after formed; and
Fig. 4 shows a flow chart of a method for forming a wire body with a multi-color spiral shape according to the present invention.

### DETAILED DESCRIPTION OF THE PREFERRED EMBODIMENT

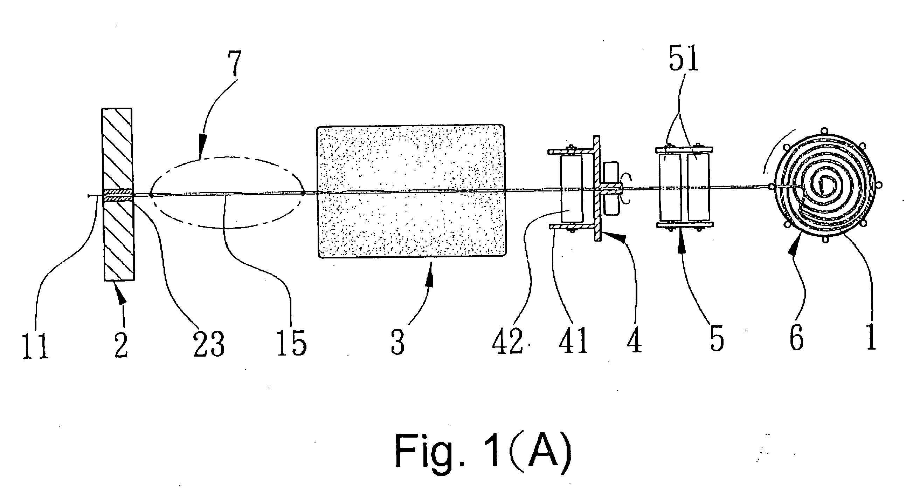

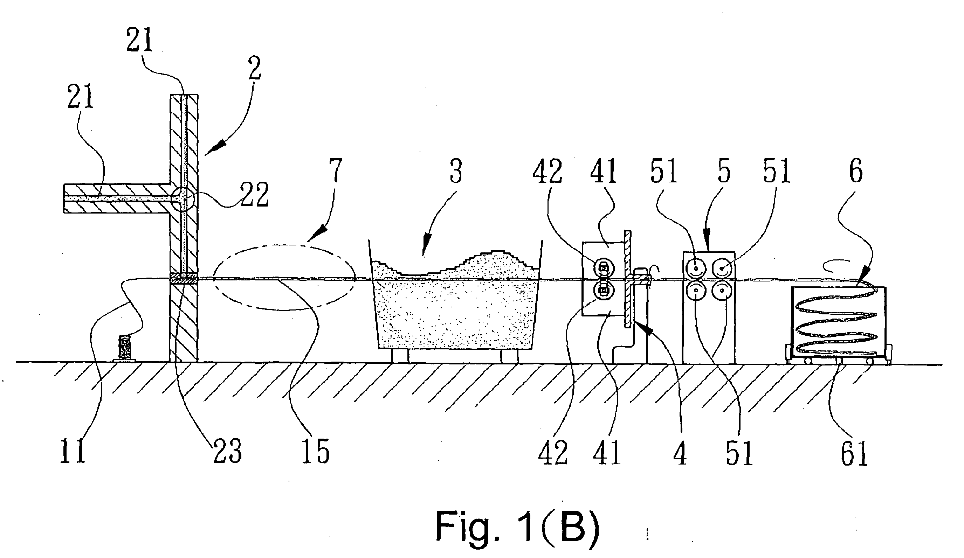

Now referring to Fig. 1 (A)-(B), a wire body with controllable spiral pattern mainly comprises a core wire 11, an injection molding device 2, a cooling device 3, a rotation device 4, a drawing device 5, and a winding base 6, provided by the present invention and a molding method thereof.

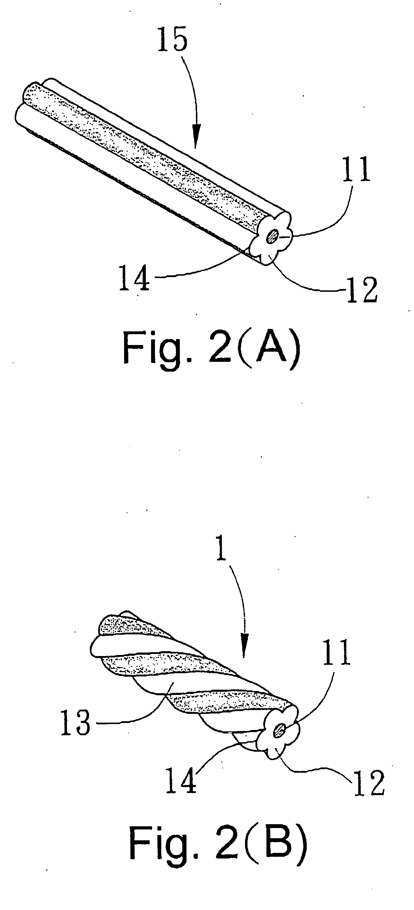

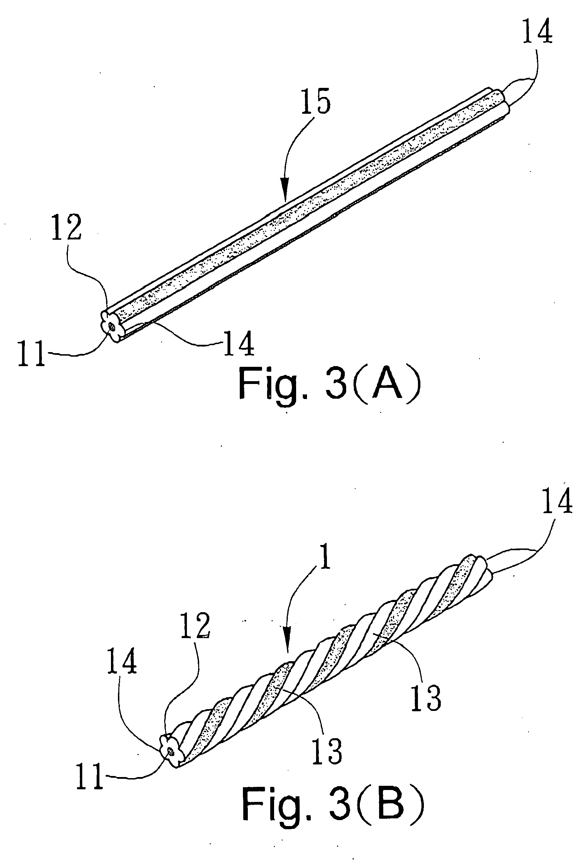

the core wire 11 passes through an after-mentioned molding section 23; the injection molding device 2 is arranged to have two or more sets of flow channels 21, a mixing section 22, and a molding section 23 having a mold, wherein the flow channel provides two or more of plastics heated in liquid state flowing into the mixing section 22, and then a wire body 1 wrapping with a core wire 11 can be extruded from the molding section 23 and has a throughout uniform shape with a cross-section with bumping periphery 5 according to the mold of the molding section, as shown in Fig. 2(A) and 3(A); the cooling device 3 is a water container that can cool down the wire body 1 extruded in high temperature through water to form the wire body 1 into a final constant shape; the rotation device 4 is driven by a motor to rotate clockwise, both sides thereof laterally extends to form two vertical fixed plates 41 which two corresponding cylinder units 42 are arranged the inner space therebetween, and the two corresponding cylinder units 42 provides a pressure for clipping the wire body 1 as the wire body 1 runs through theretween; the drawing device 5 is arranged with several pairs of corresponding rolling wheels 51 for providing the wire body 1 to run through said pairs of corresponding rolling wheels 51, driven by a motor for generating a clipping pressure and a drawing action on the wire body 1, while the cylinder units 42 in the rotation device 4 are rotated due to the drawing action; the winding base 6 in a disc form in which at the center thereof, a central bearing 61 is provided and driven by a motor, rotates counter-clockwise to collect the wire body 1 into a coil;

As shown in Fig. 2(B) and Fig. 3(B), the wire body 1 has a core wire 11 and a plastic wrapping layer 12 wrapping the core wire 11 and formed of two or more color plastics mixed from resin polymer and pigments, the wire body 1 with the constant shape can be clipped and drawn to move by the pressure of the drawing device 5, while the plastic wrapping layer 12 of the un-cooled wire body 1 extruded from the molding section 23 can be twisted in the rotation area 7 by the rotation of the rotation device into the wire body 1 which the surface thereof has a spiral pattern 13, the spiral patterned wire body 1 then is cooled down through a cooling device 3 so as to form the wire body with a final constant shape, forming the surface of the plastic wrapping layer 12 with a controllable spiral pattern 13 and the cross-section thereof having a bumping periphery 14.

Again referring to Fig. 1(A -(B) for more detail of the present invention, the present invention uses a core wire 11 as the core of the wrapped wire body 1, during manufacturing, the core wire 11 is first run through the molding section 23 arranged in the injection molding device 2, and then heating the plastics with desired colors into a liquid state, the heated plastics in the flow channels 21 are extruded by a extrusion devices (not shown) to flow into the mixing section 22 along the flow channels 21, one extrusion device and one flow channel 21 is arranged into a pair, the number of pairs of the extrusion devices and the flow channels 21 is two or more mainly depending on the number of colors to be formed on the wrapping layer 12. After heated plastics in liquid state flow into the mixing section 22, the extrusion speed of the extrusion device can also be adjusted to change the proportion of each plastic to achieve the effect of varying colors.

When the heated plastics arc extruded from the molding section 23, the core wire 11 is wrapped by the plastics to form a wire body 1 with a wrapping layer 12, wherein during extruding the wire body 1, since the cross-section of the molding section 23 is disposed with a mold with bumping periphery, the wire body 1 extruded from the molding section 23 is formed as a wire body 15 with a throughout uniform shape, as shown in Fig. 2(A) and 3(A).

After the wire body 1 with a shape extruded, the temperature of the wire body 1 itself is still high, the preceding segment of the wire body 15 with a throughout uniform shape runs through the cooling device 3, the rotation device 4, and is driven by a drawing device 5, wherein the rotation device 4 itself is provided with two corresponding cylinder units 42 so that a pressure exists between the rotation device 4 and the cylinder units 42, which causes the cylinder units 42 in the rotation device 4 rotating when the drawing action 5 acts on the wire body 1. Now, When the rotation device 4 again drives the wire body 1 with a clockwise rotation, the wire body 1 with a throughout uniform shape extruded from the molding section 23 can be subsequently twisted in the rotation area 7 into the wire body 1 which the surface thereof has a spiral pattern 13, and then runs through the cooling device 3 to be cooled into a state having a final shape, wherein the spiral pattern 13 of the shaped wire body I can be controlled with a pitch per meter in the range between 25 and 45 turns.

The rolling wheels 51 of the drawing device 5 mainly drives the wire body 1 with a spiral pattern for drawing and collection, since the wire body 1 is driven by the drawing device 5, the driving speed of the drawing device 5 also can change the desired outer diameter, the desired spiral angle, and the desired pattern after rotated of the wire body 1. The outer diameter become larger as slowing down the speed of the drawing device 5 and smaller diameter as faster, and the rotation speed of the rotation device 4 and the drawing device 5 can also control the spiral pattern and the spiral angle of the wire body 1, such as:
1. when the ratio of the rotation speed between the rotation device 4 and the drawing device 5 reaches 1:1, the spiral pattern 13 of the wire body 1 is about 30 turns/meter (supposed value);
2. when the ratio of the rotation speed between the rotation device 4 and the drawing device 5 reaches 1:2, the spiral pattern 13 of the wire body 1 is about 15 turns/meter (supposed value);
3. when the ratio of the rotation speed between the rotation device 4 and the drawing device 5 reaches 2:1, the spiral pattern 13 of the wire body 1 is about 60 turns/meter (supposed value).

And then, since the wire body 1 can be collected after formed and passing through the drawing device 5, a winding base 6 is arranged behind the drawing device 5, wherein the winding base 6 with a disc form which mainly at the center thereof, a central bearing 61 is provided and driven by a motor for rotating counter-clockwise to collect the wire body 1 into a coil, thus a spiral wire body 1 with a controllable pattern is completed; however, the ratio of the rotation speed between the rotation device 4 and the winding base 6 should be 1:1 and the rotation directions therebetween must be opposite, because if the rotation direction of the winding base 6 is the same with that of the rotation device 4, the wire body 1 in the winding base 6 may be tied up; and if the rotation direction of the winding base 6 is opposite with that of the rotation device 4, the wire body 1 in the winding base 6 may not be tied up.

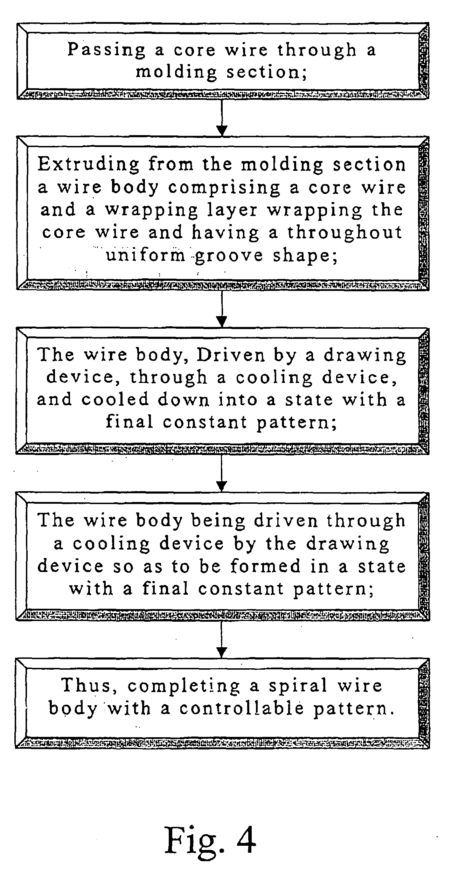

Fig. 4 shows a flow chart of a method for forming a wire body with a multi-color spiral shape according to the present invention, mainly comprising the steps of:
(1). Passing a core wire 11 through a molding section 23;
(2). Extruding a wire body 15 comprising a core wire 11 and a wrapping layer 12 wrapping the core wire 11 and having a throughout uniform pattern from the molding section 23;
(3). The wire body 15 having a throughout uniform pattern extruded from the molding section 23 being driven by the drawing device 5 and twisted in a rotation area 7 so as to form a wire body 1 which the surface thereof has a spiral pattern 13 with a pitch per meter being controlled in the range between 25 and 45 turns;
(4). The wire body 1 being driven through a cooling device 3 by the drawing device 5 so as to be formed in a state with a final constant pattern;
(5). Thus, completing a spiral wire body 1 with a controllable pattern.

The present invention uses an injection molding device 2 provided with a molding section 23 with a mold which allows the cross-section of the wire body 1 extruded from the molding section 23 coincides with the pattern of the inner hole of the molding section 23. Thus, when the wire body 1 extruding from the molding section 23, not only a wire body 15 having a core wire 11 and a wrapping layer 12 wrapping the core wire 11, but also having a throughout uniform shape 14 with a bumping cross-section. Since the present invention uses a wrapping layer 12 to wrap a core wire 11 in the wire body 1 and the wrapping layer 12 is mainly made by plastics so that has a little flexibility, and the tensile strength thereof also increases after a core wire 11 is provided in the wrapping layer 12, therefore, the wire body 1 can be used for making a furniture article, such as a seat, a desk, and the like. And, because the pattern of the wire body 1 is formed by rotation intcntionally, while used in the textile art, the wire body 1 can form controllable pattern and shape on a textile product. In additional, with the variety of the textile art, using a weaving method, such as density contrast, longitude and latitude crossing, cover & press interweaving, size contrast, and the like, which allows the wire body 1 to create an bumping and rippling embossment-like art effect on a weaving plane, and also can increase the color gradation of the weaving products.

Many changes and modifications in the above described embodiment of the invention can, of course, be carried out without departing from the scope thereof. Accordingly, to promote the progress in science and the useful arts, the invention is disclosed and is intended to be limited only by the scope of the appended claims.

## Claims

1. A spiral wire body with a controllable pattern, comprising:
a core wire passed through an after-mentioned molding section;
an injection molding device arranged to have two or more sets of flow channels, a mixing section, and a molding section having a mold, wherein the flow channel provides two or more of plastics heated in liquid state flowing into the mixing section, and then a wire body wrapping with a core wire can be extruded from the molding section and has a throughout uniform shape with a cross-section with bumping periphery according to the mold of the molding section:
a cooling device which is a water container that can cool down the wire body extruded in high temperature through water to form the wire body into a final constant shape;
a rotation device driven by a motor to rotate clockwise, both sides thereof laterally extending to form two vertical fixed plates which two corresponding cylinder units are arranged the inner space therebetween, and the two corresponding cylinder units providing a pressure for clipping the wire body as the wire body running through theretween;
a drawing device arranged with several pairs of corresponding rolling wheels for providing the wire body to run through said pairs of corresponding rolling wheels, driven by a motor for generating a clipping pressure and a drawing action on the wire body, while the cylinder units in the rotation device are rotated due to the drawing action;
a winding base in a disc form in which at the center thereof, a central bearing is provided and driven by a motor, rotating counter-clockwise to collect the wire body into a coil;
wherein the wire body has a core wire and a plastic wrapping layer wrapping the core wire and formed of two or more color plastics, the wire body with the constant shape can be clipped and drawn to move by the pressure of the drawing device, while the un-cooled wire body extruded from the molding section can be twisted in the rotation area by the rotation of the rotation device into the wire body which the surface thereof has a spiral pattern, the spiral patterned wire body then is cooled down through a cooling device so as to form the wire body with a final constant shape, forming the surface thereof with a controllable spiral pattern and the cross-section thereof having bumping periphery.

2. The spiral wire body with a controllable pattern of claim 1, wherein the cross-section shape of the wire body extruded by the forming section coincides with the shape of the internal hole of the molding section.

3. The spiral wire body with a controllable pattern of claim 1, wherein the rotation speed of the drawing device can control the size of the outer diameter of the wire body.

4. The spiral wire body with a controllable pattern of claim 1, wherein the ratio of the rotation speed between the rotation device and the drawing device can control the spiral angle of the spiral pattern of the wire body.

5. The spiral wire body with a controllable pattern of claim 1, wherein the rotation direction of the winding base is opposite to that of the rotation device.

6. The spiral wire body with a controllable pattern of claim 1, wherein the ratio of the rotation speed between the winding base and the rotation device is 1:1.

7. A method for forming a spiral wire body with a controllable pattern of any of claims 1 to 6, mainly comprising the steps of:
(1). Passing a core wire through a molding section;
(2). Extruding a wire body comprising a core wire and a wrapping layer wrapping the core wire and having a throughout uniform pattern from the molding section;
(3). The wire body having a throughout uniform pattern extruded from the molding section being driven by the drawing device and twisted in a rotation area so so as to form a wire body 1 which the surface thereof has a spiral pattern with a pitch per meter being controlled in the range between 25 and 45 turns;
(4). The wire body being driven through a cooling device by the drawing device so as to be formed in a state with a final constant pattern;
(5). Thus, completing a spiral wire body with a controllable pattern.
